# EUROPEAN PATENT SPECIFICATION

(11) **EP 1 308 266 B1**
(45) Date of publication and mention of the grant of the patent: **13.06.2007**
(21) Application number: 02079521.7
(22) Date of filing: 30.10.2002
(51) Int. Cl.: B29C 70/48, B29C 70/08, B32B 5/18, B32B 3/12

(54) **Hollow cell core composite articles molded with a liquid resin and method of fabrication**
Verbundwerkstoff-Körper mit hohlzelligem Kern und Verfahren zu dessen Herstellung
Articles composites moulés avec de la résine liquide comprenant une âme alvéolée et procédé de fabrication

(30) Priority: 30.10.2001 US 12664; 30.10.2001 US 21153
(43) Date of publication of application: 07.05.2003
(60) Divisional application: 07002450.0
(73) Proprietor: THE BOEING COMPANY, Chicago, IL 60606-2016 (US)
(72) Inventor: Holemans, Peter, Sewell, NJ 08080-3139 (US); Bernetich, Karl R., Wilmington, DE 19808-4309 (US)
(74) Representative: Land, Addick Adrianus Gosling

(56) References cited:
- EP-A- 0 770 472
- EP-A- 0 786 330
- EP-A- 1 005 978
- US-A- 5 851 336

## Description

### Technical Field

The present invention relates generally to hollow cell core composite articles and more particularly to a liquid molded honeycomb core composite articles.

### Background of the Invention

The cornerstone of aeronautics, avionics, and spacecraft design has been the ability to design lightweight components that maintain structural strength and integrity. These characteristics play a crucial role not only in traditional design considerations such as flight capabilities and structural integrity, but also play a crucial role in the adaptability and commercial performance of a given craft design. Reduced weight and structural fortitude can play a significant role in fuel consumption, craft profile, and cargo and/or passenger capacity. The increase in profitability associated with the aforementioned factors, as well as a variety of others, has provided strong motivation for design advancements in the area of strength/weight improvement.

A significant advancement in the development of low weight/high strength structures was the development of the hollow cell cores, such as honeycomb cores. Hollow cell cores provide a high strength structural base while minimizing the negative effects of the weight associated with the core material by containing voids within the core material that provide for significant weight savings as compared to a solid component. The high strength/low weight characteristic of hollow cell cores has therefore resulted in the popularity of their use within the aeronautics industry as well as a variety of other industries.

Despite the popularity of hollow cell core materials, such as honeycomb cores, there use has not been suitable for certain manufacturing processes. Liquid molding processes, for example, can present problems when applied to hollow cell core materials. Liquid molding composite manufacturing processes, such as resin transfer molding, vacuum assisted resin infusion, vacuum infusion molding, and others, present fundamental concerns for the use of hollow cell core materials. When these processes are used, it is possible for the hollow cells to fill with liquid resin prior to curing. This can make the resulting structure resin rich, heavy, and generally undesirable. It would be highly desirable to have the ability to apply liquid molding approaches to hollow cell core materials without the concerns for compromised cells.

Numerous approaches have been developed in an attempt to solve the hollow cell core/liquid molding dilemma. Often, however, the resulting solutions add undesirable weight and/or production costs to the resulting hollow core composite articles. One solution pre-processes the core to seal the cells with film adhesive, or film adhesive and prepreg, prior to liquid molding composite article fabrication to prevent liquid molding resin from penetrating the cells. Other processes include filling the hollow cells, for example, with a closed cell foam or material. This, however, often adds undesirable weight to the resulting article. Precured composite sheets autoclaved to the hollow cell core add additional weight and require a costly autoclaving process. Although a variety of other attempts are known to seal the hollow cell core, often these attempts result in undesirable weight increases, increases in the number of processing steps, and undesirable cost increases.

It would, therefore, be highly desirable to have a method for sealing hollow cell core material such that the hollow cell core material may be successfully used with known liquid molding approaches without penetration of the hollow cells by the liquid molding. In addition, it would be highly desirable for such a protective hollow cell core material to withstand liquid molding approaches without undesirable increases in weight or the requirement for costly manufacturing processes.

Document EP 1 005 978 discloses a method of producing a cured hollow core composite assembly comprising the steps of:
- applying a first adhesive layer, to an open core surface of a hollow core base to assist the bonding of a bondable solid film to the hollow core base;
- applying a bondable solid film to the open core surface so that an inner surface of the bondable solid film is bonded with the aid of the first adhesive layer to the open core surface of the hollow core base;
- applying a second layer of adhesive to an outer surface of the bondable solid film, whereby an inner surface of the second layer of adhesive contacts the outer surface of the bondable solid layer and an outer surface of the second layer of adhesive is exposed to form an outermost layer of the assembly;
- followed by applying a liquid resin over a layer of fibers placed on the hollow core composite assembly by means of a liquid molding process, whereby the solid film prevents the liquid resin from penetrating the hollow core base,
- and curing the hollow composite assembly whereby the outermost second adhesive layer aids in securely bonding the liquid molding to the hollow core composite assembly.

### Summary of the Invention

In accordance with the present invention a method according to claim 1 and a product according to claim 9 is provided. The hollow core composite assembly includes a hollow core base having at least one open core surface. The hollow core composite assembly further includes a polyetherketoneketone film applied to the open core surface. At least one adhesive film is positioned between the open core surface and the polyetherketoneketone film to bond the surfaces together. The resultant hollow core composite assembly is then suitable for use in liquid molding processes such as resin transfer molding or resin infusion processes.

The hollow core composite assembly further includes a barrier material in contact with the open core surface to prevent penetration of the open core surface during liquid molding processes. The barrier material includes a solid film affixed to the open core surface through the use of an adhesive layer positioned between the solid film and the open core surface.

Other objects and features of the present invention will become apparent when viewed in light of the detailed description of the preferred embodiment when taken in conjunction with the attached drawings and appended claims.

### Brief Description of the Drawings

FIGURE 1 is an exploded view illustration of an embodiment of a hollow core composite assembly in accordance with the present invention;
FIGURE 2 is an exploded view of an alternate embodiment of a hollow core composite assembly in accordance with the present invention;
FIGURE 3 is a flow-chart illustration of a method of producing a hollow core composite assembly in accordance with the present invention.

### Description of the Preferred Embodiment(s)

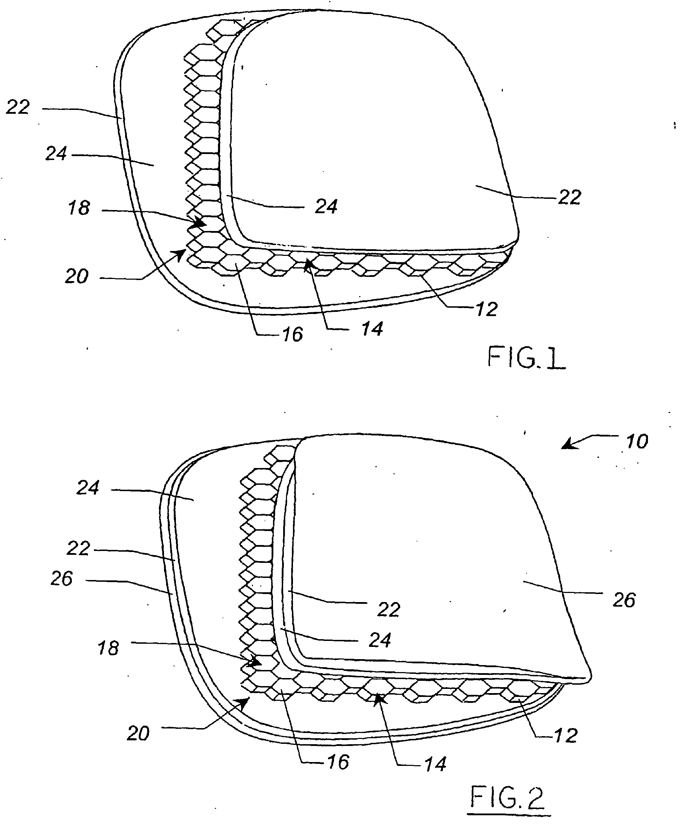

Referring now to Figure 1, which is an illustration of an embodiment of a hollow core composite assembly 10 in accordance with the present invention. The hollow core composite assembly 10 is intended for use within the aeronautics and spacecraft industy, although it is contemplated that the present invention may be utilized within a wide variety of fields.

The hollow core composite assembly 10 provides a lightweight and cost effective method of providing structural assemblies for use in aircraft and spacecraft design.

The hollow core composite assembly 10 includes a hollow core base 12 A wide variety of hollow core base 12 embodiments are known within the prior art. One such embodiment is a honeycomb core. The advantage of hollow core bases 12 is that they provide a low weight/ high strength structure popular within the aeronautics field. A traditional disadvantage to such hollow core bases 12 is that they commonly contain at least one open core surface 14 where the hollow cores 16 are exposed. This open core surface 14 provides access to the hollow cores 16 and can provide a mechanism for liquid resin from the resin transfer molding process or vacuum assisted resin transfer molding process, to penetrate the hollow core base 12 and thereby suffer losses to its weight benefits. Although it is possible for a hollow core base 12 to have a single open core surface 14, commonly a hollow core base 12 will have an upper open core surface 18 and a lower open core surface 20.

The present invention seals and protects the open core surfaces 14 through the use of a bondable solid film 22 applied to the open cores surfaces 14. A variety of bondable solid films 22 are contemplated by the present invention. One embodiment contemplates the use of a polysulphone (PSU) film. Other embodiments include, but are not limited to, bondable solid films 22 such as forms of, polyethyleneterephthalate (PET), nylon, thermoplastic polymer materials, metal foils, thermoset film materials, and urethane film materials. The primary characteristic of the solid bondable film 22 is to be impervious to penetration of the liquid resin of choice in the composite liquid molding process (such as vinyl ester, polyester epoxies, phenolids, cynate esters, etc.) and bondable to the hollow core base 12 with or without the addition of an adhesive. The solid bondable film 22 provides a barrier to prevent subsequent liquid molding materials from penetrating the hollow cores 16 and thereby compromising the integrity of the hollow core composite assembly 10.

One novel embodiment contemplates the use of polyetherketoneketone (PEKK) as the solid bondable film 22. The use of PEKK provides a variety of advantages over many films when the hollow core composite assembly 10 is for use in unique applications. One advantage, is that the PEKK film has a relatively low dielectric constant. This can be an important factor when the hollow core composite assembly 10 is intended for use within low observable aircraft. The low dielectric constant can be advantageous to designs wherein low radar profile or radar invisibility is desired. The use of PEKK also provides the advantage of providing a solid bondable film 22 with improved bonding characteristics over many solid films. This can improve and simplify the manufacturing process as well as improve the integrity of the resulting composite. Although the PEKK film 22 may be formed in a variety of dimensions, one embodiment contemplates the use of a 1.1 millimeter film.

The hollow core composite assembly 10 further includes an adhesive layer 24 positioned between the solid bondable film 22 and the open core surface 14. The adhesive layer 24, such as an adhesive film, can be utilized to assist the bonding of the solid bondable film 22 to the hollow core base 12. Although a variety of adhesive layers 24 are contemplated, one embodiment contemplates the use of FM300 film adhesive. Other contemplated adhesives 24 include, but are not limited to, thermoplastic adhesive, hot melt adhesive, epoxy paste, BMI paste, and cyanate ester paste adhesives. It is envisioned that the solid bondable film 22 and the adhesive layer 24 are attached to the hollow core composite assembly 10 as part of the composite article perform. The thermal cycle to enhance the bonding characteristic of the solid bondable film 22 to the open core surface 14 (with the presence of the adhesive layer 24) can be included in the single processing cycle for the hollow core composite assembly 10 and thereby lower processing costs and cycle time. It should be understood, however, that the solid bondable film 22 is bonded to the hollow core base 12 prior to the composite article processing cycle as a separate processing step such as pre-curing. Pre-curing refers to curing the chemically active material of a detail/subassembly prior to a future cure of a more complete assembly. In one embodiment of the present invention, the hollow core base 12 and bondable solid film 22 can be "pre-cured" prior to a liquid molding operation. During a liquid molding operation the injectioned or infused resin would then be cured.

In an alternate novel embodiment, illustrated in Figure 2, the present invention can further include at least one outer adhesive film 26 applied to the outer surface 28 of the solid bondable film 22. A distinct and novel aspect of this embodiment, is that it can assist in improving the bondable outer surface 28 of the solid bondable film 22 in order to ensure an improved hollow core composite assembly 10 when subjected to liquid molding techniques. Prior processes often required specialized surface preparation or coatings to insure that the liquid molding techniques securely bonded to the hollow core composite assembly 10. These specialized preparations could undesirably increase the cost, process steps, and time of manufacture. The present embodiment provides a relatively quick and efficient way of improving the bondable outer surface 28 of the solid bondable film 22 without the need for expensive and time consuming processes. It may also serve to increase the range of solid bondable films 22 available for a given application.

Once cured, the resulting assembly 10 becomes a sandwich panel of face skins surrounding a hollow core base 12. The liquid resin 32 is contemplated to be applied in any of a variety of known fashions. In one embodiment, it is contemplated that the liquid resin 32 is applied using a resin transfer molding process. In alternate embodiments, however, the liquid resin 32 can be applied using a variety of processes including, but not limited to, vacuum assisted resin transfer molding, vacuum infusion molding processes, etc. The liquid resin 32 may be applied to the composite article in a variety of means such as wet lay-up, resin transfer molding processes, SCRIMP, vacuum assisted resin transfer molding processes, vacuum infusion molding processes, etc. For each of the named processes, the liquid molding resin 32 is selected based on the process method, composite article end item requirements, composite article use and other factors. After the application of the liquid resin 32, the resin is allowed to set (or cure) to a rigid form permitting the composite article to be removed from the tool or mold. The method of cure is dependent upon the selected liquid resin 32. Many types of polyester resin commonly used in the marine industry cure at ambient temperatures (70 deg F) in a given amount of time, while many aerospace grade structural epoxy resins cure at 350 deg F. Each type of resin has varying cure requirements. After removal of the composite article from the tool or mold, it may undergo a post cure to enhance the resin properties or the composite article.

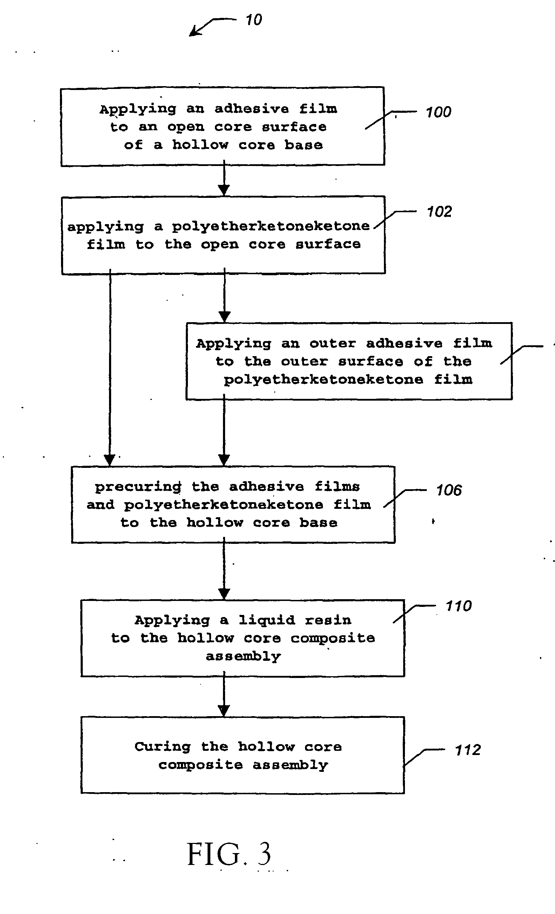

Referring now to Figure 3, which is an embodiment of a method of producing a hollow core composite assembly in accordance with the present invention. The method includes applying an adhesive film to an open core surface of a hollow core base 100. The method further includes applying a polyetherketoneketone film to the open core surface 102. In an alternate embodiment, adhesive film may be applied directly to the polyetherketoneketone film and then applied to the open core surface. The method further includes applying an outer adhesive film to the outer surface of the polyetherketoneketone film 104. In one embodiment, the method can include precuring the adhesive films and polyetherketoneketone film to the hollow core base 106. In other embodiments, however, the adhesive films and polyetherketoneketone films may be cured to the hollow core base as part of a resin application process. A liquid resin can then applied to the hollow core composite assembly 108. This may be accomplished in a single liquid resin application or may include a plurality of liquid resin applications. In addition, it is contemplated that the liquid resin may be applied in a variety of fashions including, but not limited to resin transfer molding and vacuum infusion molding processes. Finally, the hollow core composite assembly is cured 110. A variety of curing processes are contemplated by the present invention and may be used alone or in combination to effectuate curing base upon the curing requirements of the liquid resin, the adhesive film, and the hollow core base.

## Claims

1. A method of producing a cured hollow core composite assembly (10) comprising the steps of:
■ applying a first adhesive layer (24), to an open core surface (14) of a hollow core base (12) to assist the bonding of a bondable solid film to the hollow core base (12);
■ applying a bondable solid film (22) to the open core surface (14) so that an inner surface of the bondable solid film (22) is bonded with the aid of the first adhesive layer (24) to the open core surface (14) of the hollow core base (12);
■ applying a second layer of adhesive (26) to an outer surface of the bondable solid film (22), whereby an inner surface of the second layer of adhesive (26) contacts the outer surface of the bondable solid layer (22) and an outer surface of the second layer of adhesive (26) is exposed to form an outermost layer of the assembly (10);
■ followed by directly applying a liquid resin over the hollow core composite assembly (10) by means of a liquid molding process, whereby the solid film (22) prevents the liquid resin from penetrating the hollow core base (12),
■ and curing the hollow composite assembly (10) whereby the outermost second adhesive layer (26) aids in securely bonding the liquid molding to the hollow core composite assembly (10).

2. A method according to claim 1 further comprising precuring the bondable solid film (22) to the open core surface (14).

3. A method of producing a hollow core composite assembly (10) according to claims 1 or 2 further comprising curing the bondable solid film (22) to the open core surface (14) by the application of the liquid resin.

4. A method of producing a hollow core composite (10) assembly according to any of the preceding claims wherein the application of the liquid resin is accomplished utilizing a resin transfer molding process.

5. A method of producing a hollow core composite assembly according to any of preceding claims wherein said applying liquid resin is accomplished utilizing a vacuum assisted resin transfer molding process.

6. A method according to any of claims 1-5, wherein the bondable solid film (22) is a polyetherketoneketone (PEKK) film.

7. A method according to any of claims 1-6, further comprising pre-curing the first (24) and/or second adhesive layer (26) and the bondable solid (22) film to the hollow core base (12).

8. A method according to any of claims 6 or 7, further comprising curing the adhesive layers (24,26) and the PEKK film (22) to the hollow core base (12) as part of the liquid molding application process.

9. A cured hollow core composite assembly (10), comprising:
• a hollow core base (12) having an open core surface (14) ;
• a solid, bondable, polyetherketoneketone (PEKK) film (22) attached to the open core surface (14) for preventing penetration of liquid resin into the hollow core base (12) during liquid resin molding;
• a first adhesive layer (24) positioned between an inner surface of the PEKK film (22) and the open core surface (14);
• a second layer of adhesive (26) arranged on an outer surface of the PEKK film (22), which second layer of adhesive (26) forms an outermost layer of the assembly (10) and aids in securely bonding a liquid molding to the hollow core composite assembly (10). cured, fibre-force, a resin.

10. A hollow core composite assembly (10) according to claim 9 wherein the hollow core base (12) is a hollow core made of open cell foam.

11. A hollow core assembly (10) as described in any of claims 9-10, wherein the first and second adhesive layers is an epoxy paste adhesive.

12. A core composite assembly (10) according to claim 11 wherein the adhesive layers are selected from the following: cyanate ester paste adhesive, thermoset adhesive, thermoplastic adhesive, hot melt adhesive, BMI paste adhesive.

13. Use of a cured hollow core composite assembly (10) according to any of the preceding claims 9-12 an aircraft or spacecraft.

## Patentansprüche

1. Verfahren zur Herstellung einer ausgehärteten Hohlkernverbundwerkstoffanordnung (10), umfassend die Schritte:
- Aufbringen einer ersten Klebeschicht (24) auf eine offene Kernfläche (14) einer Hohlkernbasis (12), um die Verbindung eines verbindbaren festen Films mit der Hohlkernbasis (12) zu unterstützen;
- Aufbringen eines verbindbaren festen Films (22) auf die offene Kernfläche (14), so dass eine Innenoberfläche des verbindbaren festen Films (22) mit der Hilfe der ersten Klebeschicht (24) mit der offenen Kernfläche (14) der Hohlkernbasis (12) verbunden wird;
- Aufbringen einer zweiten Klebeschicht (26) auf eine Außenoberfläche des verbindbaren festen Films (22), wobei eine Innenoberfläche der zweiten Klebeschicht (26) die Außenoberfläche der verbindbaren festen Schicht (22) berührt, und wobei eine Außenoberfläche der zweiten Klebeschicht (26) frei liegt, um eine äußerste Schicht der Anordnung (10) auszubilden;
- gefolgt von einem direkten Aufbringen eines flüssigen Harzes über der Hohlkernverbundwerkstoffanordnung (10) mittels eines Flüssigformverfahrens, wobei der feste Film (22) verhindert, dass das flüssige Harz in die Hohlkernbasis (12) eindringt,
- und Aushärten der Hohlverbundwerkstoffanordnung (10), wobei die äußerste zweite Klebeschicht (26) bei dem sicheren Verbinden des flüssigen Formteils mit der Hohlkernverbundwerkstoffanordnung (10) mithilft.

2. Verfahren nach Anspruch 1, welches weiterhin ein Vor-Aushärten des verbindbaren festen Films (22) an die offene Kernfläche (14) umfasst.

3. Verfahren zur Herstellung einer Hohlkernverbundwerkstoffanordnung (10) nach Ansprüchen 1 oder 2, welches weiterhin ein Aushärten des verbindbaren festen Films (22) an die offene Kernfläche (14) durch das Aufbringen des flüssigen Harzes umfasst.

4. Verfahren zur Herstellung einer Hohlkernverbundwerkstoffanordnung (10) nach einem der vorhergehenden Ansprüche, wobei das Aufbringen des flüssigen Harzes unter Verwendung eines Harztransferformverfahrens erreicht wird.

5. Verfahren zur Herstellung einer Hohlkernverbundwerkstoffanordnung nach einem der vorhergehenden Ansprüche, wobei das Aufbringen von flüssigem Harz unter Verwendung eines vakuumunterstützten Harztransferformverfahrens erreicht wird.

6. Verfahren nach einem der Ansprüche 1-5, wobei der verbindbare feste Film (22) ein Polyetherketonketon (PEKK)-Film ist.

7. Verfahren nach einem der Ansprüche 1-6, welches weiterhin ein Vor-Aushärten der ersten (24) und/oder zweiten Klebeschicht (26) und des verbindbaren festen Films (22) an die Hohlkernbasis (12) umfasst.

8. Verfahren nach einem der Ansprüche 6 oder 7, welches weiterhin ein Aushärten der Klebeschichten (24, 26) und des PEKK-Films (22) an die Hohlkernbasis (12) als Teil des Flüssigformaufbringvorgangs umfasst.

9. Ausgehärtete Hohlkernverbundwerkstoffanordnung (10), umfassend:
- eine Hohlkernbasis (12) mit einer offenen Kernfläche (14);
- einen festen verbindbaren Polyetherketonketon (PEKK)-Film (22), welcher an der offenen Kernfläche (14) angebracht ist, um ein Eindringen von flüssigem Harz in die Hohlkernbasis (12) während eines Formens mit flüssigem Harz zu verhindern;
- eine erste Klebeschicht (24), welche zwischen einer Innenoberfläche des PEKK-Films (22) und der offenen Kernfläche (14) positioniert ist;
- eine zweite Klebeschicht (26), welche auf einer Außenoberfläche des PEKK-Films (22) angeordnet ist, wobei die zweite Klebeschicht (26) eine äußerste Schicht der Anordnung (10) ausbildet und bei einem sicheren Verbinden eines flüssigen Formteils mit der Hohlkernverbundwerkstoffanordnung (10) mithilft,
- ein ausgehärtetes faserfreies Harz.

10. Hohlkernverbundwerkstoffanordnung (10) nach Anspruch 9, wobei die Hohlkernbasis (12) ein aus einem offenzelligen Schaumstoff hergestellter Hohlkern ist.

11. Hohlkernverbundwerkstoffanordnung (10) nach einem der Ansprüche 9-10, wobei die erste und zweite Klebeschicht ein Epoxidpastenklebstoff ist.

12. Hohlkernverbundwerkstoffanordnung (10) nach Anspruch 11, wobei die Klebeschichten ausgewählt sind aus den Folgenden: Cyanatestherpastenklebstoff, wärmehärtbarer Klebstoff, thermoplastischer Klebstoff, Heißschmelzklebstoff, BMI-Pastenklebstoff.

13. Verwendung einer ausgehärteten Hohlkernverbundwerkstoffanordnung (10) nach einem der vorhergehenden Ansprüche 9-12 in einem Flugzeug oder einem Raumfahrzeug.

## Revendications

1. Procédé de fabrication d'un ensemble composite à âme alvéolée cuit (10) comprenant les étapes consistant à :
appliquer une première couche adhésive (24) sur une surface d'âme ouverte (14) d'une base formant âme alvéolée (12) pour faciliter le collage d'un film solide collable sur la base formant âme alvéolée (12) ;
appliquer un film solide collable (22) sur la surface d'âme ouverte (14) de telle sorte qu'une surface intérieure du film solide collable (22) soit collée à l'aide de la première couche adhésive (24) à la surface d'âme ouverte (14) de la base formant âme alvéolée (12) ;
appliquer une seconde couche d'adhésif (26) sur une surface extérieure du film solide collable (22), moyennant quoi une surface intérieure de la seconde couche d'adhésif (26) est en contact avec la surface extérieure de la couche solide collable (22) et une surface extérieure de la seconde couche d'adhésif (26) est apparente pour former la couche la plus extérieure de l'ensemble (10) ;
puis à appliquer directement une résine liquide sur l'ensemble composite à âme alvéolée (10) au moyen d'un procédé de moulage par voie liquide, moyennant quoi le film solide (22) empêche la résine liquide de pénétrer dans la base formant âme alvéolée (12) ;
et à cuire l'ensemble composite à âme alvéolée (10) moyennant quoi la seconde couche adhésive la plus extérieure (26) permet de coller solidement le liquide de moulage à l'ensemble composite à âme alvéolée (10).

2. Procédé selon la revendication 1 comprenant en outre de précuire le film solide collable (22) sur la surface d'âme ouverte (14).

3. Procédé de fabrication d'un ensemble composite à âme alvéolée (10) selon la revendication 1 ou 2 comprenant en outre de cuire le film solide collable (22) sur la surface d'âme ouverte (14) par l'application de la résine liquide.

4. Procédé de fabrication d'un ensemble composite à âme alvéolée (10) selon l'une quelconque des revendications précédentes dans lequel l'application de la résine liquide est accomplie en utilisant un procédé de moulage par transfert de résine.

5. Procédé de fabrication d'un ensemble composite à âme alvéolée (10) selon l'une quelconque des revendications précédentes, dans lequel ladite application de résine liquide est accomplie en utilisant un procédé de moulage par transfert de résine assisté par dépression.

6. Procédé selon l'une quelconque des revendications 1 à 5, dans lequel le film solide collable (22) est un film de polyéthercétonecétone (PEKK).

7. Procédé selon l'une quelconque des revendications 1 à 6, comprenant en outre de précuire la première (24) et/ou la seconde (26) couche adhésive et le film solide collable (22) sur la base formant âme alvéolée (12).

8. Procédé selon l'une quelconque des revendications 6 ou 7, comprenant en outre de cuire les couches adhésives (24, 26) et le film en PEKK (22) sur la base formant âme alvéolée (12) comme partie intégrante du procédé d'application du liquide de moulage.

9. Ensemble composite à âme alvéolée cuit (10), comprenant:
une base formant âme alvéolée (12) ayant une surface d'âme ouverte (14) ;
un film en polyéthercétonecétone (PEKK) solide et collable (22) fixé sur la surface d'âme ouverte (14) pour empêcher la pénétration de résine liquide dans la base formant âme alvéolée (12) lors du moulage à la résine liquide ;
une première couche adhésive (24) placée entre une surface intérieure du film en PEKK (22) et la surface d'âme ouverte (14) ;
une seconde couche d'adhésif (26) disposée sur une surface extérieure du film en PEKK (22), ladite seconde couche d'adhésif (26) formant la couche la plus extérieure de l'ensemble (10) et permettant de coller solidement un liquide de moulage sur l'ensemble composite à âme alvéolée (10).

10. Ensemble composite à âme alvéolée (10) selon la revendication 9 dans lequel la base formant âme alvéolée (12) est une âme alvéolée faite en mousse à alvéoles ouverts.

11. Ensemble composite à âme alvéolée (10) selon l'une quelconque des revendications 9 à 10 dans lequel la première et la seconde couches adhésives sont constituées d'un adhésif en pâte époxy.

12. Ensemble composite à âme alvéolée (10) selon la revendication 11 dans lequel les couches adhésives sont choisies dans le groupe constitué par un adhésif en pâte à base d'ester de cyanate, un adhésif thermodurcissable, un adhésif thermoplastique, un adhésif thermofusible, un adhésif en pâte BMI.

13. Utilisation d'un ensemble composite à âme alvéolée cuit (10) selon l'une quelconque des revendications 9 à 12 dans un avion ou dans engin spatial.
